(19) Europäisches Patentamt
European Patent Office
Office européen des brevets

(11) **EP 0 651 011 B1**

(12) **EUROPÄISCHE PATENTSCHRIFT**

(45) Veröffentlichungstag und Bekanntmachung des Hinweises auf die Patenterteilung:
**31.03.1999 Patentblatt 1999/13**

(51) Int Cl.⁶: **C08L 23/10**, C08J 5/18

(21) Anmeldenummer: **94116136.6**

(22) Anmeldetag: **13.10.1994**

(54) **Harzhaltige, biaxial orientierte Polypropylenfolie, Verfahren zu ihrer Herstellung und ihre Verwendung**

Resin-containing, biaxially oriented polypropylene film, process for its manufacture and its use

Film de polypropylène, contenant une résine, orienté biaxialent, procédé pour sa préparation et son utilisation

(84) Benannte Vertragsstaaten:
**BE DE ES FR GB IT NL**

(30) Priorität: **21.10.1993 DE 4335960**

(43) Veröffentlichungstag der Anmeldung:
**03.05.1995 Patentblatt 1995/18**

(73) Patentinhaber: **Hoechst Trespaphan GmbH 66539 Neunkirchen (DE)**

(72) Erfinder:
• **Peiffer, Herbert, Dr. D-55126 Mainz (DE)**
• **Murschall, Ursula, Dr. D-55283 Nierstein (DE)**
• **Dries, Thomas, Dr. D-55270 Schwabenheim (DE)**

(74) Vertreter: **Luderschmidt, Schüler & Partner GbR Patentanwälte, Postfach 3929 65029 Wiesbaden (DE)**

(56) Entgegenhaltungen:
**EP-A- 0 079 520          EP-A- 0 441 027
EP-A- 0 544 652          DE-A- 2 045 115**

**Beschreibung**

Die Erfindung betrifft eine Polypropylenfolie aus einer Schicht, welche Polypropylen und Harz enthält.

Die erfindungsgemäße Folie zeichnet sich durch ein gutes Twistverhalten und sehr gute Migrationseigenschaften aus.

Die Erfindung betrifft ferner ein Verfahren zur Herstellung der Folie sowie ihre Verwendung.

Eine besondere Art des Verschlusses von Volleinschlägen zum Zwecke der Verpackung von Verpackungsgütern ist das Drehen oder Wrappen. Bekannt ist dieses Verfahren der Verpackung insbesondere beim Volleinschlag kleinerer Verpackungsgüter, wobei bevorzugt runde oder annähernd runde Gegenstände wie Bonbons, Flaschen, Kerzen, Dropsrollen, Schokoladen- und Marzipanriegel, Ostereier oder ähnliches häufig auf diese Art verpackt werden.

Voraussetzung für den Einsatz der Folie in diesem Anwendungsgebiet ist ihr Drehvermögen. Die Rückstellkräfte in der Folie dürfen nicht dazu führen, daß sich nach dem Twisten der Zwickel wieder zurückdreht, wodurch das eingepackte Gut leicht herausfallen kann. Nach dem Stand der Technik wird für den Dreheinschlag vorwiegend Zellglas, also regenerierte Zellulose, nicht orientiertes Polypropylen oder PVC-Folie verwendet, siehe "Verpacken mit Kunststoffen" von Günther Kühne, herausgegeben 1974, Carl-Hanser-Verlag, München, Seite 63.

In neuester Zeit wurden verschiedentlich biaxial orientierte Polypropylenfolien für die Dreheinschlagsanwendung vorgeschlagen, welche zur Erzielung der gewünschten Dreheigenschaften ein niedermolekulares Harz enthalten. Diese bekannten Dreheinschlagsfolien sind verbesserungsbedürftig bezüglich ihres Migrationsverhaltens.

Es ist im Stand der Technik bekannt, daß bestimmte Additive, welche der Basisschicht von Polypropylenfolien zugesetzt werden, nach einer gewissen Zeit an die Oberfläche wandern. Diese Migration ist erwünscht, da die Additive dadurch eine vorteilhafte Wirkung auf der Oberfläche entfalten können. Solche Folien sind beispielsweise in der US-A-4,419,410 beschrieben.

Die DE-C-20 45 115 beschreibt die Verwendung hydrierter Polymerisatgemische in trägerlosen Folien, wobei die hydrierten, vinylaromatischen Kohlenwasserstoffharze eine derartige Verteilung des mittleren Molekulargewichts aufweisen, daß nicht mehr als etwa 15 % des Polymerisats ein Molekulargewicht (Mw) außerhalb des Bereichs von 600 bis 20 000 besitzt. Es ist beschrieben, daß die Verträglichkeit des Harzes mit einem Mw von mehr als 20 000 stark abnimmt und Material mit einem Mw von unterhalb 600 die Folie klebrig macht. Innerhalb des Bereichs von 600 bis 20 000 ist das mittlere Molekulargewicht nicht kritisch. Der Harzzusatz verleiht dem Polypropylen Heißsiegelfähigkeit, welches selbst gar nicht oder nur schwer siegelbar ist.

In der GB-A-1 231 861 wird eine boPP-Folie beschrieben, die eine gute Drehfähigkeit besitzt. Diese erhält die Folie durch Ausrüstung des Propylenhomopolymeren mit einem niedrigmolekularen Harz und durch eine bevorzugte Orientierung in Maschinenrichtung. Als niedrigmolekulare Harze werden Terpenpolymere, kompatible hydrierte Kohlenwasserstoffharze oder kompatible Rosins beschrieben. Die Harze werden durch ihr Molekulargewicht, durch ihre Erweichungstemperatur und durch ihre Jodzahl gekennzeichnet. Zum Einsatz kommen danach bevorzugt solche Harze, die ein Molekulargewicht von größer 600, eine Erweichungstemperatur von größer 100 °C und eine Jodzahl von kleiner 15 aufweisen. Als ein typisches Harz wird z. B. Picopale 100 mit einem Molekulargewicht von ca. 1 170, einer Erweichungstemperatur von ca. 100 °C und einer Jodzahl von 200 genannt.

Die beschriebenen Harze sind mit dem Propylenhomopolymeren sehr gut verträglich und können zu guten mechanischen Eigenschaften und sehr guten Twisteigenschaften beitragen.

Das im Vergleich zum Propylenhomopolymeren sehr niedrigmolekulare Harz weist bezüglich der Herstellung, der Verarbeitung und der Verwendung in Polypropylenfolien große Nachteile auf. Das Harz neigt zum Entmischen und diffundiert an die Oberfläche der Folie. Beim Herstellungsprozeß kann dies eine erhöhte Klebeneigung oder Ablagerung des Harzes z. B. auf Walzen zur Folge haben. Bei der Verarbeitung neigen die eingepackten Bonbons zum Verblocken, wodurch deren Weitertransport verhindert oder eingeschränkt ist.

Beim Kontakt der Folie mit Füllgut, insbesondere mit fetthaltigem Füllgut, tritt ein weiterer schwerwiegender Nachteil der niedrigmolekularen Harze auf. Das Harz migriert schon nach kurzer Zeit in das Lebensmittel, was nach lebensmittelrechtlichen Bestimmungen nicht zulässig ist. Daher sind Folien, welche solche migrierenden niedrigmolekularen Harze enthalten, für die Verpackung fetthaltiger Nahrungsmittel nicht zu verwenden.

In der EP-A-0 217 388 wird eine Folie beschrieben, die sich ebenfalls durch gute Twisteigenschaften auszeichnet. Zur Erzielung des guten Twistverhaltens wird dem Propylenhomopolymeren in der Basisschicht ein niedrigmolekulares Harz zugegeben. Daneben werden die Verfahrensbedingungen so gewählt, daß der E-Modul in beiden Orientierungsrichtungen größer als 3 000 N/mm$^2$ ist. Im Beispiel wird als Harz Arkon P 125 angegeben, das ein Molekulargewicht von ca. 1 000 aufweist und einen Erweichungspunkt von 125 °C hat. Neben den zuvor genannten Vorteilen weist dieses Harz deutliche Nachteile bei der Folienherstellung, bei der Folienverarbeitung und beim Kontakt der Folie mit fetthaltigen Lebensmitteln auf.

Obwohl die beschriebenen Folien mit nicht harzhaltigen Deckschichten abgedeckt sind, findet bereits beim Kontakt mit heißen Walzen (z. B. bei der Längsstreckung) eine so starke Diffusion des Harzes an die Oberfläche der Folie statt, daß es relativ schnell zu Ablagerungen des Harzes an den Walzenoberflächen kommen kann. Die Maschine muß häufig geputzt werden, was einen deutlichen Kapazitätsverlust zur Folge haben kann.

Weiterhin ist auch bei diesen Harzen das Migrationsverhalten sehr ausgeprägt. Bei Kontakt der Folie mit Fett ist z. B. nach einer Prüfdauer von 10 Tagen und einer Prüftemperatur von 40 °C praktisch das gesamte in der Folie enthaltene Harz in das Fett migriert.

In der GB-A-2 055 688 wird eine mehrschichtige siegelfähige, transparente boPP-Folie mit guten mechanischen Eigenschaften und guten Siegeleigenschaften beschrieben. Zur Verbesserung der mechanischen Eigenschaften enthält die Basisschicht neben Propylenhomopolymeren ein niedrigmolekulares Harz. Der Harzanteil beträgt 2 bis 20 Gew.-%. Die Deckschichten bestehen im wesentlichen aus einer Mischung von mindestens zwei Copolymeren, die eine exzellente Siegelbarkeit der Folie ergeben. Die Folie wird biaxial verstreckt, wobei sowohl die Stufenstreckung als auch die Simultanstreckung angewendet werden. Letztere Streckart ist teuer, kann aber zu guten Twisteigenschaften der Folie führen. In den Beispielen wird als Harz Arkon P 125 angegeben, das ein Molekulargewicht von ca. 1 000 aufweist und daher die vorstehend beschriebenen extremen Nachteile bezüglich Diffusions- und Migrationsverhalten aufweist.

In der GB-A-2 028 168 wird eine siegelfähige boPP-Folie mit sehr guten mechanischen Eigenschaften beschrieben. Zur Verbesserung der mechanischen Eigenschaften enthält die Basisschicht zusätzlich zum Propylenhomopolymeren ein niedrigmolekulares Kohlenwasserstoffharz. Der Harzanteil beträgt 1 bis 50 Gew.-%. Das verwendete Harz hat ein Molekulargewicht von größer als 600, vorzugsweise von 1 000, und einen Erweichungspunkt von größer als 70 °C. Aufgrund des relativ niedrigen Molekulargewichts des verwendeten Harzes werden die zuvor beschriebenen Nachteile erwartet.

In der US-A-4,921,749 wird eine siegelfähige boPP-Folie mit verbesserten mechanischen und optischen Eigenschaften beschrieben. Ebenfalls verbessert sind die Siegelbarkeit der Folie und die Durchlässigkeit für Wasserdampf und Sauerstoff. Sämtliche Verbesserungen resultieren aus der Zugabe eines niedrigmolekularen Harzes in die Basisschicht. Der Harzanteil beträgt dabei zwischen 3 und 30 Gew.-%. Das Harz hat ein Molekulargewicht deutlich kleiner als 5 000, bevorzugt kleiner als 1 000, und beträgt beispielsweise 600. Der Erweichungspunkt des Harzes liegt bei 120 bis 140 °C. Aufgrund der angegebenen Streckverhältnisse von 5:1 in Maschinenrichtung und 10:1 in Querrichtung eignet sich die Folie nur bedingt für den Dreheinschlag. Durch das niedrige Molekulargewicht des Harzes sind die Diffusion des Harzes durch die Folie und die Migration in das Lebensmittel sehr hoch.

In der EP-A-0 317 276 wird eine boPP-Folie für die Twistanwendung offenbart, die in der Basisschicht ein Propylenhomopolymeres und ein Kohlenwasserstoffharz enthält. Die Konzentration des Harzes beträgt zwischen 1 und 40 Gew.-%. Aufgrund der gewählten Rezeptur soll sich die Folie durch gute dead fold-Eigenschaften auszeichnen und für die Twistfilmanwendung geeignet sein. Das verwendete Harz ist z. B. ein $C_9$-Terpolymer (®Arkon P 125), das ein Molekulargewicht von ca. 1 000 besitzt. Die Nachteile eines solchen Harzes wurden zuvor beschrieben.

Die Aufgabe der vorliegenden Erfindung bestand darin, eine harzhaltige Folie zur Verfügung zu stellen, die ein gutes Twistverhalten für den Dreheinschlag aufweist und nicht zur Anreicherung von Harz im verpackten fetthaltigen Lebensmittel führt. Dabei sollen die anderen Folieneigenschaften, die im Hinblick auf deren Verwendung als Dreheinschlagsfolie gefordert sind, nicht beeinträchtigt werden, d. h. die Folie soll z. B. eine gute Transparenz, einen hohen Glanz und gute Kratzfestigkeit aufweisen.

Erfindungsgemäß wird diese Aufgabe gelöst durch eine einschichtige Folie der eingangs genannten Gattung, deren kennzeichnendes Merkmal darin besteht, daß das Harz ein mittleres Molekulargewicht $M_w$ von 2000 bis 8000 hat.

Es wurde bei der Untersuchung von verpackten fetthaltigen Lebensmitteln gefunden, daß Harze mit einem mittleren Molekulargewicht von kleiner 1 500 in das fetthaltige Lebensmittel migrieren und sich dort anreichern. Dieser Effekt ist außerordentlich unerwünscht und schränkt die Anwendung vieler harzhaltiger Folien für Lebensmittelverpackungen sehr ein. Überraschenderweise wird die Migration des Harzes vermieden, wenn ein solches mit einem mittleren Molekulargewicht $M_w$ von 2000 bis 8000 in der Folie eingesetzt werden.

Die erfindungsgemäße einschichtige Folie enthält neben dem Harz im wesentlichen ein Propylenpolymer oder eine Mischung von Propylenpolymer mit anderen Polyolefinen. Im allgemeinen enthält die Folie 60 bis 95 Gew.-%, vorzugsweise 60 bis 90 Gew.-%, insbesondere 65 bis 85 Gew.-%, Propylenpolymer, bezogen auf das Gewicht der Basisschicht.

Das in der einschichtigen Folie im allgemeinen eingesetzte Propylenhomopolymere enthält zum überwiegenden Teil (mindestens 90 Gew.-%, vorzugsweise 95 bis 100 Gew.-%, bezogen auf das Polymere) Propylen und besitzt einen Schmelzpunkt von 140 °C oder höher, vorzugsweise 150 bis 170 °C. Isotaktisches Homopolypropylen mit einem n-heptanlöslichen Anteil von 6 Gew.-% und weniger, bezogen auf das isotaktische Homopolypropylen, ist bevorzugt. Das Homopolymere hat im allgemeinen einen Schmelzflußindex von 0,5 g/10 min bis 15 g/10 min, vorzugsweise 2,0 g/10 min bis 10 g/10 min (gemessen bei 230 °C und einer Kraft von 21,6 N nach DIN 53 735).

Gegebenenfalls kann die Basisschicht aufgrund der Verwendung von Folienregenerat zusätzlich Copolymere von Ethylen und Propylen mit einem Ethylengehalt von 10 Gew.-% und weniger, Copolymere von Propylen mit $C_4$-$C_8$-α-Olefinen mit einem α-Olefingehalt von 10 Gew.-% und weniger in geringen Mengen enthalten, im allgemeinen 0 bis 10 Gew.-%, vorzugsweise 1 bis 5 Gew.-%, bezogen auf das Gesamtgewicht der Basisschicht.

EP 0 651 011 B1

Gegebenenfalls kann das in der einschichtigen Folie eingesetzte Propylenpolymere durch den Zusatz von organischen Peroxiden teilabgebaut werden. Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$$A = \frac{MFI_2}{MFI_1}$$

$MFI_1 =$    Schmelzflußindex des Propylenpolymeren vor dem Zusatz des organischen Peroxids
$MFI_2$    Schmelzflußindex des peroxidisch abgebauten Propylenpolymeren

Im allgemeinen liegt der Abbaufaktor A des eingesetzten Propylenpolymeren in einem Bereich von 2 bis 15, vorzugsweise 4 bis 10.

Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Die einschichtige Folie enthält erfindungsgemäß ein Harz mit einem mittleren Molekulargewicht $M_w$ von 2000 bis 8000, vorzugsweise 2 000 bis 6 500, im allgemeinen in einer Menge von 3 bis 40 Gew.-%, vorzugsweise 5 bis 35 Gew.-%, bezogen auf das Gewicht der einschichtigen Folie. Die Auswahl eines höhermolekularen Harzes mit einem mittleren Molekulargewicht von mindestens 2000 ist wesentlich für das verbesserte Migrationsverhalten. Es wurde gefunden, daß Bestandteile des Harzes mit einem Molekulargewicht kleiner als 1 000 besonders gut migrieren. Daher ist es erfindungswesentlich, daß das Harz mindestens ein mittleres Molekulargewicht von 2000 aufweist. Es ist besonders vorteilhaft, wenn das eingesetzte Harz nur geringe Anteile mit einem Molekulargewicht von kleiner als 1 000 enthält. Diese Anteile sollten möglichst weniger als 35 Gew.-%, vorzugsweise weniger als 30 Gew.-%, insbesondere weniger als 25 Gew.-%, jeweils bezogen auf das Gewicht des Harzes, betragen.

Als Harze sind insbesondere Kohlenwasserstoffharze, bevorzugt. Die Kohlenwasserstoffharze können teilweise oder vollständig hydriert sein. Als Harze kommen grundsätzlich synthetische Harze oder Harze natürlichen Ursprungs in Frage. Es hat sich als besonders vorteilhaft erwiesen, Harze mit einem Erweichungspunkt von ≥80 °C (gemessen nach DIN 1995-U4 bzw. ASTM E-28) einzusetzen, wobei solche mit einem Erweichungspunkt von 100 bis 180 °C, insbesondere 120 bis 160 °C, bevorzugt sind. Die Einarbeitung des Harzes in die Folie (z. B. Einschnecken- oder Kaskadenextruder) erfolgt vorzugsweise in Form eines Masterbatches, welches in den Extruder zugegeben wird. Üblich sind beispielsweise Masterbatche, in denen 30 bis 70 Gew.-%, vorzugsweise 50 Gew.-%, Propylenhomopolymeres und 70 bis 30 Gew.-%, vorzugsweise 50 Gew.-%, Kohlenwasserstoffharz enthalten sind. Die Angaben in Gew.-% beziehen sich auf das Gesamtgewicht an Propylenpolymer und Kohlenwasserstoffharz.

Unter den zahlreichen Harzen sind Kohlenwasserstoffharze bevorzugt, und zwar in Form der Erdölharze (Petroleumharze), Styrolharze, Cyclopentadienharze und Terpenharze (diese Harze sind in Ullmanns Encyklopädie der techn. Chemie, 4. Auflage, Band 12, Seiten 525 bis 555, beschrieben).

Die Erdölharze sind solche Kohlenwasserstoffharze, die durch Polymerisation von tiefzersetzten (deep-decomposed) Erdölmaterialien in Gegenwart eines Katalysators hergestellt werden. Diese Erdölmaterialien enthalten gewöhnlich ein Gemisch von harzbildenden Substanzen wie Styrol, Methylstyrol, Vinyltoluol, Inden, Methylinden, Butadien, Isopren, Piperylen und Pentylen. Die Styrolharze sind Homopolymere von Styrol oder Copolymere von Styrol mit anderen Monomeren wie Methylstyrol, Vinyltoluol und Butadien. Die Cyclopentadienharze sind Cyclopentadienhomopolymere oder Cyclopentadiencopolymere, die aus Kohlenteerdestillaten und zerlegtem Erdölgas erhalten werden. Diese Harze werden hergestellt, indem die Materialien, die Cyclopentadien enthalten, während einer langen Zeit bei hoher Temperatur gehalten werden. In Abhängigkeit von der Reaktionstemperatur können Dimere, Trimere oder Oligomere erhalten werden.

Die Terpenharze sind Polymerisate von Terpenen, d. h. Kohlenwasserstoffen der Formel $C_{10}H_{16}$, die in fast allen etherischen Ölen oder ölhaltigen Harzen von Pflanzen enthalten sind, und phenolmodifizierte Terpenharze. Als spezielle Beispiele der Terpene sind Pinen, α-Pinen, Dipenten, Limonen, Myrcen, Camphen und ähnliche Terpene zu nennen. Bei den Kohlenwasserstoffharzen kann es sich auch um die sogenannten modifizierten Kohlenwasserstoffharze handeln. Die Modifizierung erfolgt im allgemeinen durch Reaktion der Rohstoffe vor der Polymerisation, durch Einführung spezieller Monomere oder durch Reaktion des polymerisierten Produkts, wobei insbesondere Hydrierungen oder Teilhydrierungen vorgenommen werden.

Als Kohlenwasserstoffharze werden außerdem Styrolhomopolymerisate, Styrolcopolymerisate, Cyclopentadienhomopolymerisate, Cyclopentadiencopolymerisate und/oder Terpenpolymerisate mit einem Erweichungspunkt von jeweils oberhalb 100 °C eingesetzt (bei den ungesättigten Polymerisaten ist das hydrierte Produkt bevorzugt). Ganz besonders bevorzugt werden die Cyclopentadienpolymerisate mit einem Erweichungspunkt von 140 °C und darüber in der einschichtigen Folie eingesetzt.

Die Dicke der erfindungsgemäßen Polypropylenfolie kann innerhalb weiter Grenzen variieren und richtet sich nach dem beabsichtigten Einsatz. Sie beträgt vorzugsweise 5 bis 100 µm, insbesondere 10 bis 60 µm.

Die Dichte der Folie liegt im allgemeinen bei 0,9 g/cm$^3$ oder darüber, vorzugsweise im Bereich von 0,9 bis 1,0 g/cm$^3$.

Zur Verbesserung der Hafteigenschaften kann mindestens eine Oberfläche der Folie corona- oder flammbehandelt werden, wobei gegebenenfalls die entsprechende Behandlung an beiden Oberflächen vorgenommen werden und gleich oder verschieden sein kann.

Um bestimmte Eigenschaften der erfindungsgemäßen Polypropylenfolie noch weiter zu verbessern, kann sie weitere Zusätze in einer jeweils wirksamen Menge enthalten, vorzugsweise Antistatika und/oder Antiblockmittel und/oder Gleitmittel und/oder Stabilisatoren und/oder Neutralisationsmittel, die mit den Propylenpolymeren verträglich sind, mit Ausnahme der Antiblockmittel, die im allgemeinen unverträglich sind. Alle Mengenangaben in der folgenden Ausführung in Gewichtsprozent (Gew.-%) beziehen sich jeweils auf das Gesamtgewicht der Folie.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-$(C_1\text{-}C_4)$-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.-%. Des weiteren wird Glycerinmonostearat in einer Menge von 0,03 % bis 0,5 % bevorzugt als Antistatikum eingesetzt.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanaminformaldehyd-Polymere, Siliciumdioxid und Calciumcarbonat. Die wirksame Menge an Antiblockmittel liegt im Bereich von 0,01 bis 1 Gew.-%, vorzugsweise 0,05 bis 0,8 Gew.-%. Die mittlere Teilchengröße liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders geeignet sind.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-%. Ein insbesondere geeignetes aliphatisches Säureamid ist Erucasäureamid.

Der Zusatz von Polydimethylsiloxanen ist im Bereich von 0,02 bis 2,0 Gew.-% bevorzugt, insbesondere Polydimethylsiloxane mit einer Viskosität von 10 000 bis 1 000 000 mm$^2$/s.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate.

Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxy-phenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Calciumstearat und/oder Dihydrotalcit und/oder Calciumcarbonat einer mittleren Teilchengröße von höchstens 0,7 µm, einer absoluten Teilchengröße von kleiner 10 µm und einer spezifischen Oberfläche von mindestens 40 m$^2$/g.

Die Erfindung betrifft weiterhin ein Verfahren zur Herstellung der erfindungsgemäßen Polypropylenfolie nach dem an sich bekannten Extrusionsverfahren. Im Rahmen dieses Verfahrens wird so vorgegangen, daß die Polymerschmelze durch eine Flachdüse extrudiert wird, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Coronabehandlung vorgesehenen Oberflächenschicht coronabehandelt wird.

Die biaxiale Streckung (Orientierung) wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird wie beim Extrusionsverfahren üblich die Mischung aus Polypropylen und Harz in einem Extruder komprimiert und verflüssigt, wobei die gegebenenfalls zugesetzten Additive bereits in der Mischung enthalten sein können. Die Schmelze wird dann durch eine Flachdüse (Breitschlitzdüse) gepreßt, und die ausgepreßte Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. Für die Dreheinschlagsfolie werden die Bedingungen in der Längs- und in der Querrichtung so gewählt, daß die Folie in Längs- und Querrichtung balanced orientiert ist und isotrope mechanische Eigenschaften hat. Beispielsweise beträgt das Verhältnis der bleibenden Dehnung oder der Reißfestigkeit in Querrichtung zur bleibenden Dehnung oder Reißfestigkeit in Längsrichtung maximal 2,0. Die Voraussetzungen für die Erzielung von sehr guten Twisteigenschaften sind dann besonders günstig. Weiterhin hat sich gezeigt, daß die Drehfähigkeit um so besser wird, je höher die Folie längsverstreckt ist. Die erfindungsgemäßen Längsstreckungsverhältnisse sind 5,0 bis 9, vorzugsweise 5,5 bis 8,0. Dementsprechend sind auch die Querstreckverhältnisse zu wählen. Vorzugsweise ergibt sich hier ein Bereich von 5,0 bis 9,0. Zweckmäßigerweise wird die Folie nicht - wie dies bei anderen Verpackungsfolien der Fall ist - hochquerverstreckt. Die Anwendungen von einem Längsstreckverhältnis von $\lambda = 4,5$ und einem Querstreckverhältnis von $\lambda = 10$ ergibt - auch bei der Zugabe von hohen Harzmengen - eine Folie mit vergleichsweise schlechter Twistfähigkeit. Zur Erzielung der erfindungswesentlichen Twisteigenschaften ist ein Verhältnis der Streckverhältnisse von quer/längs von kleiner 2, vorzugsweise kleiner 1,5, einzuhalten. Besonders bevorzugt liegt dieses Verhältnis im Bereich von 0,5 bis 1,5.

Die Querstreckung wird im allgemeinen so ausgeführt, daß die Folie im Querstreckrahmen zunächst auf eine maximale Breite $B_{max}$ gestreckt wird. Vor dem anschließenden Thermofixieren läuft der Querstreckrahmen wieder leicht zusammen, so daß die Endfolienbreite kleiner als die Maximalbreite $B_{max}$ des Querstreckrahmens ist. Der Grad des Zusammenlaufens des Querstreckrahmens wird als Konvergenz angegeben, die aus der maximalen Breite des Querstreckrahmens $B_{max}$ und der Endfolienbreite $B_{Folie}$ nach der folgenden Formel berechnet wird:

$$Konvergenz = \frac{B_{max} - B_{Folie}}{B_{max}}$$

Das Querstreckverhältnis $\lambda$ ist ein Effektivwert, der aus der Endfolienbreite $B_{Folie}$, der Breite des unverstreckten Randbereichs der Folie $B_{Rand}$ und der Breite der längsgestreckten Folie $B_{längs}$ nach der folgenden Formel berechnet wird:

$$\lambda = \frac{B_{Folie} - 2 \bullet B_{Rand}}{B_{längs} - 2 \bullet B_{Rand}}$$

An die biaxiale Streckung der Folie schließt sich ihre Thermofixierung (Wärmebehandlung) an, wobei die Folie etwa 0,1 bis 10 s lang bei einer Temperatur von 100 bis 160 °C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie abgekühlt und verfestigt wird, durch einen Heizund Kühlkreislauf bei einer Temperatur von 10 bis 100 °C, vorzugsweise 20 bis 70 °C, zu halten.

Die Temperaturen, bei denen Längs- und Querstreckung durchgeführt werden, können in einem relativ großen Bereich variieren und richten sich nach der jeweiligen Zusammensetzung der Polymermischung und nach den gewünschten Eigenschaften der Folie. Im allgemeinen wird die Längsstreckung vorzugsweise bei 80 bis 150 °C und die Querstreckung vorzugsweise bei 120 bis 170 °C durchgeführt.

Gegebenenfalls kann/können wie oben erwähnt nach der biaxialen Streckung eine oder beide Oberfläche/n der Folie nach einer der bekannten Methoden corona- oder flammbehandelt werden. Die Behandlungsintensität liegt im allgemeinen im Bereich von 37 bis 50 mN/m, vorzugsweise 39 bis 45 mN/m.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 400 und 3 000 V, vorzugsweise liegt sie im Bereich von 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Es wurde gefunden, daß ein Harz mit einem mittleren Molekulargewicht $M_w$ von mindestens 2000 vorteilhafte Auswirkungen hat. Das Harz trägt in der gewünschten Weise zur Verbesserung der Twisteigenschaften bei, weist aber gleichzeitig sehr niedrige Migrationswerte auf. Damit wird erstmals eine einschichtige Folie zur Verfügung gestellt, welche für den Dreheinschlag schokoladenhaltiger Bonbons verwendet werden kann. Alle bisher bekannten Folien konnten wegen der Migration des Harzes in das Lebensmittel nicht eingesetzt werden. Es wurde weiterhin gefunden, daß neben dem mittleren Molekulargewicht des Harzes von mindestens 2000 auch dessen Molekulargewichtsverteilung im Bereich von Molekulargewichten unterhalb 1 000 zusätzlich eine Rolle bei der Migration spielt. Während der Stand der Technik den Einsatz gerade solcher niedermolekularer Harze lehrt oder das Molekulargewicht bzw. die Molekulargewichtsverteilung für unkritisch hält, wurde nun gefunden, daß gerade diese niedermolekularen Bestandteile stark migrieren. Daher ist es besonders günstig, wenn man neben einem Mindestwert für das mittlere Molekulargewicht (2000) noch zusätzlich darauf achtet, daß die Bestandteile des Harzes mit einem Molekulargewicht im Bereich von unter 1 000 möglichst gering sind.

Überraschenderweise werden auch mit diesen höhermolekularen Harzen die gewünschten mechanischen Folieneigenschaften erzielt.

Die balanced orientierten Ausführungsformen der Folie zeichnen sich durch hervorragende Twisteigenschaften aus. Die Twistfähigkeit der Folie kann sehr gut durch zwei physikalische Größen der Folie beschrieben werden. Die Twistfähigkeit ist umso besser, je größer die bleibende Dehnung (in Längs- und Querrichtung; Meßmethode siehe nachstehend) und je kleiner die Reißdehnung in Längsrichtung ist. Die Werte der obigen physikalischen Größen sollten in beiden Richtungen etwa gleich groß sein. Das Verhältnis der Werte für die bleibende Dehnung $D_{bQ}{:}D_{bL}$ liegt im allgemeinen unter 2,0. Vorzugsweise liegt das Verhältnis $D_{bQ}{:}D_{bL}$ im Bereich von 0,5 bis 1,5, insbesondere im Bereich von 0,7 bis 1,3. Entsprechende Verhältnisse bilden auch die Werte für Reißdehnung quer und längs.

Eine gute Twistfähigkeit ist gegeben, wenn die bleibenden Dehnwerte für beide Richtungen über 50 %, vorzugsweise im Bereich von 50 bis 90 %, liegen.

Die Reißdehnung wird nach DIN 53 455 bestimmt. Die erfindungsgemäßen einschichtigen Folien haben Reißdehnwerte in beiden Richtungen von kleiner 160 %, vorzugsweise kleiner 130 %.

Zusammenfassend ist festzustellen, daß sich die erfindungsgemäße einschichtige Polypropylenfolie durch eine Kombination von Eigenschaften auszeichnet, welche bisher an einer Folie nicht gemeinsam realisiert werden konnten:

- sehr gute Twisteigenschaften;
- sehr gutes Migrationsverhalten, insbesondere niedrige Migration in fetthaltigen Lebensmitteln;
- keine Harzablagerungen auf den Walzen;
- kein Verblocken von Folienverpackungen gegeneinander und
- sehr gute Kratzfestigkeit.

Durch diese Kombination von Eigenschaften wird erstmals eine Folie zur Verfügung gestellt, welche für den vorgesehenen Verwendungszweck als Dreheinschlagsfolie z. B. für schokoladenhaltige Bonbons wirklich kommerziell verwendet werden kann.

Zur Charakterisierung der Rohstoffe und der Folien wurden die folgenden Meßmethoden benutzt:

Schmelzflußindex

Der Schmelzflußindex wurde in Anlehnung an DIN 53 735 bei 21,6 N Belastung und 230 °C bzw. bei 50 N Belastung und 190 °C gemessen.

Schmelzpunkt

DSC-Messung, Maximum der Schmelzkurve, Aufheizgeschwindigkeit 20 °C/min.

Viskositätszahl J

Die Viskositätszahl ist ein Maß für die Molmasse. Die Viskositätszahl wird nach DIN 53 728, Teil 4, in 0,1%iger Dekahydronaphthalin-Lösung bei 135 °C gemessen.

Dichte $\rho$

Die Dichte wird nach DIN 53 479, Verfahren A, bestimmt.

Kristallisationsgrad α

Der Kristallisationsgrad läßt sich durch folgende Beziehung ermitteln:

$$\alpha = \frac{\rho - \rho_{amorph}}{\rho_{kristallin} - \rho_{amorph}} \cdot 100\ \%$$

mit

| | |
|---|---|
| $\rho_{amorph}$ | = 0,8549 g/cm$^3$ |
| $\rho_{kristallin}$ | = 1,0005 g/cm$^3$ |
| $\rho$ = | Dichte des eingesetzten HDPE-Typs |

Trübung

Die Trübung der Folie wurde in Anlehnung an ASTM-D 1003-52 gemessen.

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° oder 85° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

Rauhigkeit

Die Rauhigkeit wurde in Anlehnung an DIN 4768 bestimmt.

Reibung

Die Reibung wurde in Anlehnung an DIN 53 375 bestimmt.

Oberflächenspannung

Die Oberflächenspannung wurde mittels der sogenannten Tintenmethode (DIN 53 364) bestimmt.

Bedruckbarkeit

Die coronabehandelten Folien wurden 14 Tage nach ihrer Produktion (Kurzzeitbeurteilung) bzw. 6 Monate nach ihrer Produktion (Langzeitbeurteilung) bedruckt.
Die Farbhaftung wurde mittels Klebebandtest beurteilt. Konnte mittels Klebeband wenig Farbe abgelöst werden, so wurde die Farbhaftung mit mäßig und bei deutlicher Farbablösung mit schlecht beurteilt.

Bestimmung der bleibenden Dehnung

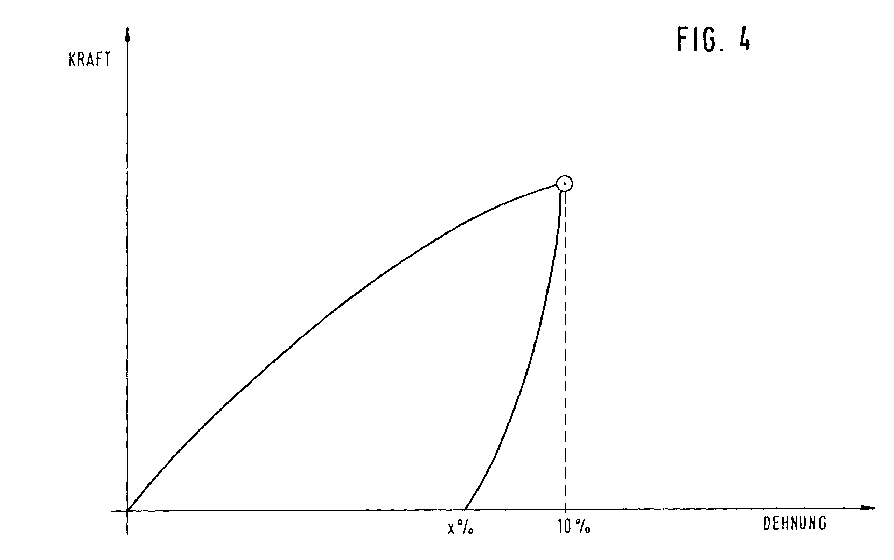

Aus der Folie wurde ein 15 mm breiter Folienstreifen quer zur Maschinenrichtung geschnitten und in eine Zugprüfmaschine eingespannt, wobei die Einspannlänge 200 mm betrug. Die Probe wurde dann mit 20 mm/min entsprechend 10 %/min gedehnt. Nach einer Dehnung von 10 %, d. h. bei einer Probenlänge von 220 mm, wurde die Probe automatisch mit gleicher Geschwindigkeit entspannt. Die Bestimmung der bleibenden Dehnung aus dem Kraft-Dehnungs-Diagramm ist in der beigefügten Figur 4 schematisch dargestellt. Die bleibende Dehnung berechnet sich dabei gemäß

$$D_b = \frac{X\ \%}{10\ \%} \cdot 100\ \%$$

Molekulargewichtsbestimmung

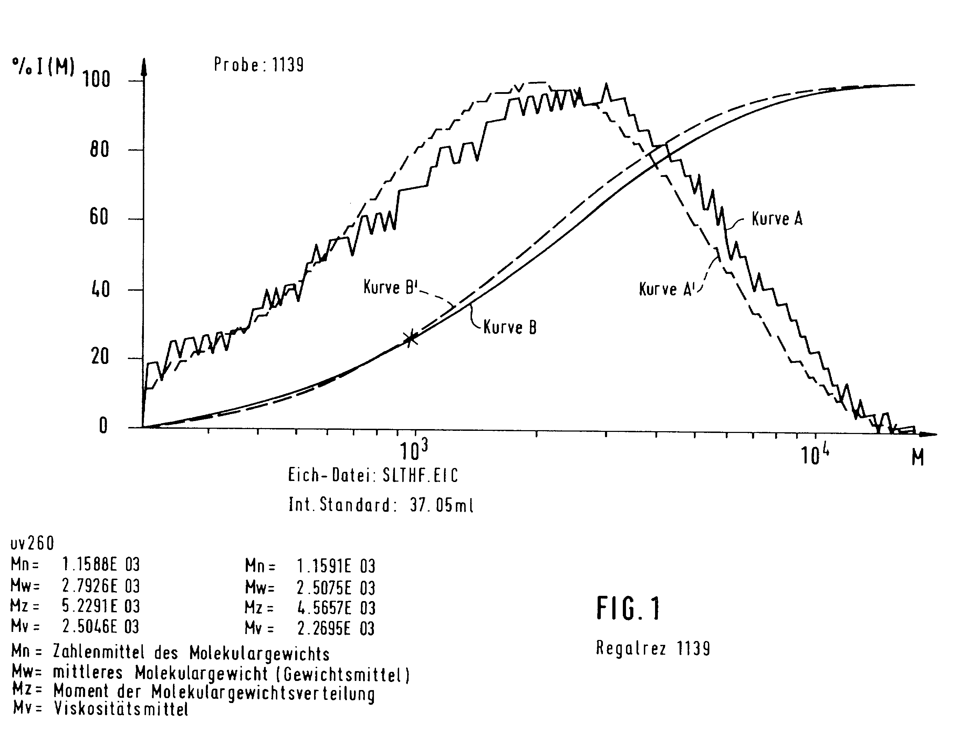

Zur Bestimmung des Molekulargewichts wird die Drei-Detektor-Gelpermeationschromatographie verwendet. Die Substanz wird in einem Laufmittel wie THF aufgelöst und über eine Trennsäule gegeben. Die Trennsäule ist 90 cm lang und mit einem porösen Trägermaterial gefüllt, dessen Porengröße 5 µm beträgt. Die Detektion erfolgt mittels UV-Absorptionsspektroskopie bei verschiedenen Wellenlängen sowie mittels Brechungsindex und Lichtstreuvermögen der Fraktionen. Die Eichung wird über eine Standardverbindung mit bekanntem Molekulargewicht durchgeführt. Der Vergleich der UV-Absorption der Standardsubstanz mit der Absorption der Probe ermöglicht die Zuordnung der Molekulargewichte. In einer graphischen Darstellung werden die prozentualen Mengenanteile der einzelnen molekular einheitlich gedachten Fraktionen gegen deren Molekulargewicht aufgetragen (siehe beispielsweise Figuren 1 bis 3). Diese Darstellung ist die sogenannte Verteilungskurve (Kurve A). Zusätzlich zeigt die Summenkurve (Kurve B) den prozentualen Anteil der Fraktionen bis zu einem bestimmten Molekulargewicht. Beispielsweise zeigt Punkt X der Summenkurve in Figur 1, daß ein Harzanteil von 25 Gew.-% ein Molekulargewicht von unter 1 000 hat. Das mittlere Molekulargewicht Mw wird aus dem Maximum der Verteilungskurve als Abszissenwert bestimmt.

Migrationsverhalten

Zur Prüfung des Migrationsverhaltens werden kreisförmige Folienmuster mit der zu prüfenden Seite einseitig in Kontakt mit dem $^{14}$C-markierten Prüffett HB 307 gebracht. Dabei werden auf eine Fläche von 0,62 dm$^2$ 120 ml Fett aufgebracht. Die Proben werden 10 Tage lang bei 40 °C in Migrationszellen aufbewahrt. Die Bestimmung der Migrationswerte erfolgt nach den Angaben des Bundesgesundheitsblattes 18,27 (1975) nach K. Figge.

Kratzfestigkeit bzw. Kratzempfindlichkeit

Die Kratzfestigkeit wird in Anlehnung an DIN 53 754 bestimmt. Für die Bestimmung der Kratzfestigkeit wird das Abriebmeßgerät Taber Modell 503 Abraser der Firma Teledyne Taber benutzt, wobei Reibräder der Marke Calibrade R H18, die mit 250 g belastet werden, eingesetzt werden. Unter Kratzfestigkeit bzw. Kratzempfindlichkeit versteht man die Trübungszunahme der verkratzten Folie im Vergleich zur Originalfolie nach 50 Umdrehungen des Probentellers. Die Kratzfestigkeit wird mit sehr gut (++) bezeichnet, wenn die Trübungszunahme kleiner 22 % beträgt, mit gut (+), wenn die Trübungszunahme bei 22 bis 25 % liegt, mit mäßig (±), wenn die Trübungszunahme bei 25 bis 30 % liegt, und mit schlecht (-) bei Trübungszunahmen von größer 30 %.

**Beispiel 1**

Es wurde durch Extrusion und anschließende stufenweise Orientierung in Längsund in Querrichtung eine einschichtige Folie mit einer Gesamtdicke von 21 µm hergestellt.
Zusammensetzung der Folie:

| | |
|---|---|
| 71,65 Gew.-% | isotaktisches Polypropylen |
| 28 Gew.-% | Kohlenwasserstoffharz [®Regalrez 1139 von Hercules Inc. (Copolymer aus α-Methylstyrol und Vinyltoluol)] mit einer Erweichungstemperatur von 140 °C und einem mittleren Molekulargewicht M$_w$ von ca. 2 500 |
| 0,2 Gew.-% | N,N-bis-ethoxyalkylamin |
| 0,1 Gew.% | Erucasäureamid |
| 0,05 Gew.-% | Siliciumdioxid mit einem Teilchendurchmesser von 2,5 µm |

| | |
|---|---|
| Der Schmelzflußindex der Mischung betrug | $I_{21,6}$ = 10 g/10 min bzw. $I_{50,0}$ = 50 g/10 min |

Die Herstellungsbedingungen in den einzelnen Verfahrensschritten waren:

| | |
|---|---|
| Extrusion | Temperatur = 190 °C |
| | Temperatur der Abzugswalze: 30 °C |
| Längsstreckung | Temperatur T T 110 °C |
| | Längsstreckverhältnis = 6,0 |

(fortgesetzt)

| Querstreckung | Temperatur T = 150 °C |
| | Querstreckverhältnis = 7,3 |
| | Konvergenz 25 % |
| Fixierung | Temperatur T = 110 °C |

Das eingesetzte Kohlenwasserstoffharz hatte die in Figur 1 dargestellte Molekulargewichtsverteilung. Der Anteil an Harz mit einem Molekulargewicht von unter 1 000 betrug ca. 28 %.

Die auf diese Weise hergestellte einschichtige Folie hatte die in der Tabelle aufgelisteten Eigenschaften (erste Zeile: Beispiel 1). Die Folie wurde vor der Aufrollung einer Coronabehandlung unterzogen, um eine Bedruckbarkeit zu gewährleisten. Die Oberflächenspannung der Folie infolge dieser Behandlung betrug 42 mN/m.

Beispiel 2

Wie in Beispiel 1 wurde eine einschichtige Folie mit einer Gesamtdicke von 21 µm hergestellt. Im Gegensatz zu Beispiel 1 betrug jetzt der Harzgehalt 20 Gew.-%. Das Harz war das gleiche geblieben. Die Extrusionstemperaturen wurden gleichgehalten. Bedingt durch den geringeren Harzgehalt wurden die Bedingungen in der Längs- und Querstreckung wie folgt geändert.

| Längsstreckung | Temperatur T = 115 °C |
| | Längsstreckverhältnis = 7,2 |
| Querstreckung | Temperatur T = 152 °C |
| | Querstreckverhältnis = 7,2 |
| | Konvergenz 20 % |

Die Folieneigenschaften sind in der Tabelle - zweite Zeile (Beispiel 2) - aufgelistet.

Beispiel 3

Verglichen mit den vorherigen Beispielen (1 und 2) wurde der Harzgehalt auf 15 % abgesenkt. Die Bedingungen in den Streckaggregaten waren wie folgt:

| Längsstreckung | Temperatur T = 120 °C |
| | Längsstreckverhältnis = 7,7 |
| Querstreckung | Temperatur T = 153 °C |
| | Querstreckverhältnis = 7,2 |

Beispiel 4

Im Vergleich zu Beispiel 1 wurde jetzt ein Kohlenwasserstoffharz mit einem mittleren Molekulargewicht $M_w$ von 2 100 [®Regalrez 1128 (Copolymer aus $\alpha$-Methylstyrol und Vinyltoluol)] verwendet. Sonst wurden die Bedingungen konstant gehalten.

Vergleichsbeispiel 1

Im Vergleich zu Beispiel 1 wurde jetzt ein Kohlenwasserstoffharz mit einem mittleren Molekulargewicht $M_w$ von ca. 860 verwendet [®Escorez ECR 356 (Cyclopentadienharz)]. Die Walzenablagerungen waren stark, das eingepackte Bonbon neigte zum Verblocken, und insbesondere das Migrationsverhalten gegenüber Fett war zu hoch.

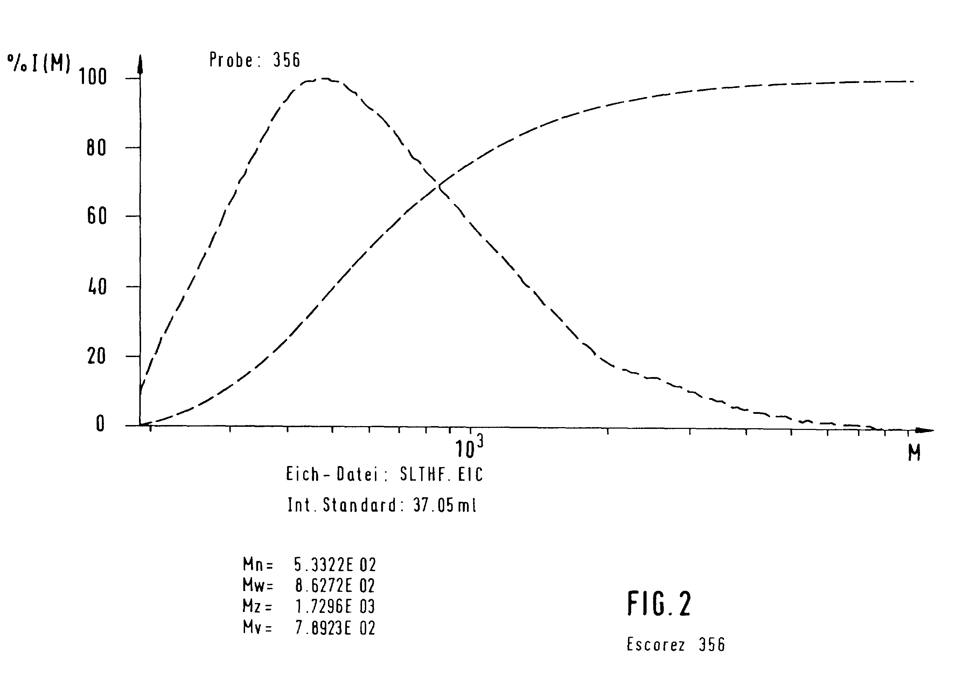

Das Harz hatte die in Figur 2 dargestellte Molekulargewichtsverteilung. Der Harzanteil mit einem Molekulargewicht von unter 1 000 betrug ca. 70 %.

Vergleichsbeispiel 2

Gegenüber Vergleichsbeispiel 1 wurde jetzt ein Kohlenwasserstoffharz mit einem mittleren Molekulargewicht $M_w$ von ca. 1 000 verwendet [®Arkon P125 (Styrolharz)]. Auch hier waren die Eigenschaften deutlich schlechter als die bei der erfindungsgemäßen Folie.

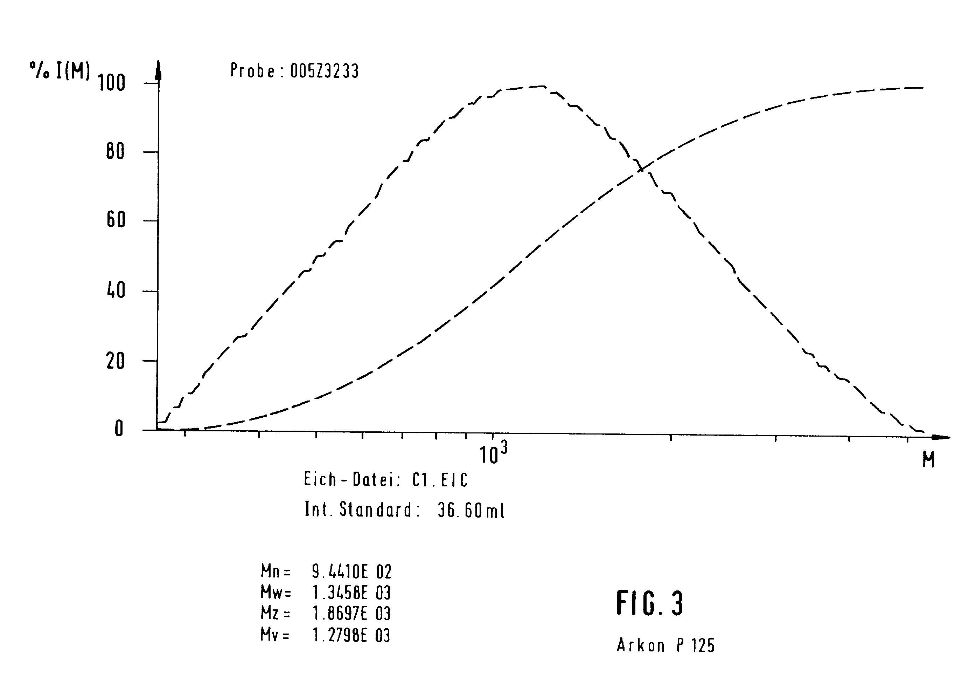

Das Harz hatte die in Figur 3 dargestellte Molekulargewichtsverteilung. Der Harzanteil mit einem Molekulargewicht von unter 1 000 betrug 40 %.

## TABELLE

| | bleibende Dehnung | | E-Modul | Reißdehnung | Glanz | Trübung | Kratzfestigkeit | Ablagerung auf Walzen | Verblocken beim Wel-terverarbeiten | Migration in Fett |
| | % | | N/mm² | % | | % | ΔTrübung | | | mg/dm² |
| | längs | quer | längs/quer | längs/quer | | | | | | |
|---|---|---|---|---|---|---|---|---|---|---|
| B1 | 61 | 62 | 3 200/3 300 | 120/180 | 105 | 2,3 | 22 | + + | + + | 30 |
| B2 | 60 | 61 | 3 100/3 300 | 105/85 | 105 | 2,2 | 24 | + + + | + + + | 20 |
| B3 | 61 | 60 | 3 200/3 400 | 95/88 | 108 | 2,1 | 22 | + + + + | + + + + | 15 |
| B4 | 62 | 63 | 3 300/3 400 | 118/85 | 103 | 2,2 | 23 | + | + | 35 |
| VB1 | 64 | 62 | 3 250/3 400 | 115/90 | 105 | 2,1 | 23 | -- | -- | 65 |
| VB2 | 62 | 63 | 3 300/3 500 | 118/87 | 102 | 2,2 | 24 | -- | -- | 60 |

B = Beispiel; VB = Vergleichsbeispiel

+ = keine Ablagerungen, kein Verblocken, geringe Migration in Fett

- = Ablagerungen, Verblocken, Migration

EP 0 651 011 B1

## EP 0 651 011 B1

**Patentansprüche**

1. Polypropylenfolie aus einer Schicht, welche Polypropylen und Harz enthält, dadurch gekennzeichnet, daß das Harz ein mittleres Molekulargewicht Mw von 2000 bis 8000 hat.

2. Polypropylenfolie gemäß Anspruch 1, dadurch gekennzeichnet, daß das Harz ein mittleres Molekulargewicht Mw von 2 500 bis 6 500, hat.

3. Polypropylenfolie gemäß einem der Ansprüche 1 und/oder 2, dadurch gekennzeichnet, daß das Harz einen Erweichungspunkt von 80 bis 180°C, vorzugsweise 100 bis 160°C, hat.

4. Polypropylenfolie gemäß einem oder mehreren der Ansprüche 1 bis 3, dadurch gekennzeichnet, daß der Anteil an Harz mit einem Molekulargewicht von unter 1 000 höchstens 35 Gew.-%, vorzugsweise höchstens 30 Gew.-%, bezogen auf das Gesamtgewicht des Harzes, beträgt.

5. Polypropylenfolie gemäß einem oder mehreren der Ansprüche 1 bis 4, dadurch gekennzeichnet, daß das Harz in einer Menge von 3 bis 40 Gew.-%, vorzugsweise 5 bis 35 Gew.-%, jeweils bezogen auf das Gewicht der Folie, zugesetzt ist.

6. Polypropylenfolie gemäß einem oder mehreren der Ansprüche 1 bis 5, dadurch gekennzeichnet, daß sie in Längs- und Querrichtung einen bleibenden Dehnwert von über 50 %, vorzugsweise im Bereich von 50 bis 90 %, hat.

7. Polypropylenfolie gemäß einem oder mehreren der Ansprüche 1 bis 6, dadurch gekennzeichnet, daß sie isotrope mechanische Eigenschaften hat.

8. Verfahren zur Herstellung der Polypropylenfolie gemäß Anspruch 1, bei dem die Schmelze durch eine Flachdüse extrudiert wird, die extrudierte Folie über eine Abzugswalze, deren Temperatur zwischen 10 und 100°C liegt, abgezogen wird, die Folie biaxial gestreckt wird mit einem Längsstreckverhältnis von 5:1 bis 9:1 und einem Querstreckverhältnis von 5:1 bis 9:1, die biaxial gestreckte Folie thermofixiert, gegebenenfalls coronabehandelt und anschließend aufgewickelt wird.

9. Verfahren gemäß Anspruch 8, dadurch gekennzeichnet, daß die Längsstreckung der Folie bei 80 bis 150°C und die Querstreckung bei 120 bis 170°C durchgeführt wird.

10. Verwendung der Polypropylenfolie gemäß einem oder mehreren der Ansprüche 1 bis 7 für den Dreheinschlag.

**Claims**

1. A polypropylene film consisting of a layer which contains polypropylene and resin, characterised in that the resin has an average molecular weight Mw of 2000 to 8000.

2. A polypropylene film according to claim 1, characterised in that the resin has a mean molecular weight Mw of 2500 to 6500.

3. A polypropylene film according to one of claims 1 and/or 2, characterised in that the resin has a softening point of 80 to 180°C and preferably 100 to 160°C.

4. A polypropylene film according to one or more of claims 1 to 3, characterised in that the proportion of resin with a molecular weight of less than 1000 is not more than 35% by weight and preferably at most 30% by weight in relation to the total weight of resin.

5. A polypropylene film according to one or more of claims 1 to 4, characterised in that the resin is added in a quantity of 3 to 40% by weight and preferably 5 to 35% by weight, respectively in relation to the weight of the film.

6. A polypropylene film according to one or more of claims 1 to 5, characterised in that in the longitudinal and transverse directions, it has a permanent set value of over 50% and preferably in the range from 50 to 90%.

7. A polypropylene film according to one or more of claims 1 to 6, characterised in that it has isotropic mechanical properties.

8. A method of producing the polypropylene film according to claim in which the molten batch is extruded through a flat nozzle, the extruded film is pulled off a take-off roll, the temperature of which is between 10 and 100°C, the film is biaxially stretched with a longitudinal stretching ratio of 5:1 to 9:1 and a transverse stretching ratio of 5:1 to 9:1, the biaxially stretched film is heat-fixed, possibly corona-treated and then rolled up.

9. A method according to claim 8, characterised in that the longitudinal stretching of the film is carried out at 80 to 150°C and the transverse stretching at 120° to 170°C.

10. Use of the polypropylene film according to one or more of claims 1 to 7 for twist-wrapping.


**Revendications**

1. Feuille mince en polypropylène à une seule couche, contenant du polypropylène et une résine, caractérisée en ce que la résine présente un poids moléculaire moyen Mw compris entre 2000 et 8000.

2. Feuille mince en polypropylène selon la revendication 1, caractérisée en ce que la résine présente un poids moléculaire moyen Mw compris entre 2500 et 6500.

3. Feuille mince en polypropylène selon l'une des revendications 1 et/ou 2, caractérisée en ce que la résine présente un point de ramollissement compris entre 80 et 180°C et, de préférence, entre 100 et 160°C.

4. Feuille mince en polypropylène selon une ou plusieurs des revendications 1 à 3, caractérisée en ce que la teneur en résine d'un poids moléculaire inférieur à 1000 est égale au maximum à 35% en poids et, de préférence, au maximum à 30% en poids, rapporté au poids total de la résine.

5. Feuille mince en polypropylène selon une ou plusieurs des revendications 1 à 4, caractérisée en ce que la résine est ajoutée en une quantité comprise entre 3 et 40% en poids et, de préférence, entre 5 et 35% en poids, rapportée chaque fois au poids de la feuille.

6. Feuille mince en polypropylène selon une ou plusieurs des revendications 1 à 5, caractérisée en ce qu'elle présente, en direction longitudinale et transversale, un allongement permanent supérieur à 50% et, de préférence, compris dans l'intervalle allant de 50 à 90%.

7. Feuille mince en polypropylène selon une ou plusieurs des revendications 1 à 6, caractérisée en ce qu'elle possède des propriétés mécaniques isotropes.

8. Procédé de préparation de la feuille de polypropylène selon la revendication 1, dans lequel la masse fondue est extrudée à travers une busette plate, la feuille mince extrudée est étirée sur un cylindre de traction dont la température est comprise entre 10 et 100°C, la feuille subit un étirage biaxial avec un rapport d'étirage longitudinal compris entre 5:1 et 9:1 et un rapport d'étirage transversal compris entre 5:1 et 9:1, la feuille étirée biaxialement subit une thermofixation, et est traitée éventuellement par effet couronne puis est ensuite bobinée.

9. Procédé selon la revendication 8, caractérisé en ce que l'étirage longitudinal de la feuille est réalisé entre 80 et 150°C et l'étirage transversal entre 120 et 170°C.

10. Utilisation de la feuille mince en polypropylène selon une ou plusieurs des revendications 1 à 7 pour un emballage à torsion.

FIG. 1

Regalrez 1139

%I(M)

Probe: 1139

Kurve A

Kurve B'

Kurve A'

Kurve B

Eich-Datei: SLTHF.EIC

Int.Standard: 37.05ml

uv260

| | | | |
|---|---|---|---|
| Mn = | 1.1588E 03 | Mn = | 1.1591E 03 |
| Mw = | 2.7926E 03 | Mw = | 2.5075E 03 |
| Mz = | 5.2291E 03 | Mz = | 4.5657E 03 |
| Mv = | 2.5046E 03 | Mv = | 2.2695E 03 |

Mn = Zahlenmittel des Molekulargewichts
Mw = mittleres Molekulargewicht (Gewichtsmittel)
Mz = Moment der Molekulargewichtsverteilung
Mv = Viskositätsmittel

EP 0 651 011 B1

Probe: 356

%I(M) 100 80 60 40 20 0

$10^3$

M

Eich-Datei: SLTHF. EIC

Int. Standard: 37.05 ml

Mn = 5.3322E 02
Mw = 8.6272E 02
Mz = 1.7296E 03
Mv = 7.8923E 02

## FIG. 2

Escorez 356

Probe : 005Z3233

Eich-Datei: C1.EIC

Int. Standard: 36.60 ml

Mn = 9.4410E 02
Mw = 1.3458E 03
Mz = 1.8697E 03
Mv = 1.2798E 03

FIG. 3

Arkon P 125

EP 0 651 011 B1

FIG. 4

KRAFT

x%     10%     DEHNUNG

EP 0 651 011 B1